# EUROPÄISCHE PATENTSCHRIFT

(11) **EP 2 678 202 B1**
(45) Veröffentlichungstag und Bekanntmachung des Hinweises auf die Patenterteilung: **23.03.2016**
(21) Anmeldenummer: 11807951.6
(22) Anmeldetag: 29.12.2011
(51) Int. Cl.: B60T 13/74, B60T 17/22

(54) **VERFAHREN ZUM BETÄTIGEN EINER FESTSTELLBREMSE IN EINEM FAHRZEUG**
VEHICLE PARKING BRAKE ACTUATING METHOD
PROCEDE DE ACTIONNEMENT D'UN FREIN DE STATIONNEMENT DANS UN VEHICULE

(30) Priorität: 25.02.2011 DE 102011004763
(43) Veröffentlichungstag der Anmeldung: 01.01.2014
(73) Patentinhaber: Robert Bosch GmbH, 70442 Stuttgart (DE)
(72) Erfinder: BIELTZ, Karsten, 74395 Mudelsheim (DE); HAUBER, Simon, 71691 Freiberg am Neckar (DE)
(86) Internationale Anmeldenummer: PCT/EP2011/074246
(87) Internationale Veröffentlichungsnummer: WO 2012/113485

(56) Entgegenhaltungen:
- DE-A1- 10 021 601
- DE-B3- 10 361 042

## Beschreibung

Die Erfindung betrifft ein Verfahren zum Betätigen einer Feststellbremse in einem Fahrzeug.

### Stand der Technik

Aus der DE 103 61 042 B3 ist eine Feststell- bzw. Parkbremse in einem Fahrzeug bekannt, welche dazu eingesetzt wird, im Stillstand eine das Fahrzeug festsetzende Klemmkraft zu erzeugen. Die Feststellbremse ist elektromechanisch ausgebildet und umfasst einen elektrischen Bremsmotor als Aktuator, bei dessen Betätigung ein Bremskolben, welcher Träger eines Bremsbelages ist, axial gegen eine Bremsscheibe verstellt wird.

Zum Lösen der Parkbremse muss der elektrische Bremsmotor in Gegenrichtung betätigt werden. Das Fahrzeug kann wieder bewegt werden, sobald die Klemmkraft der Feststellbremse zumindest weitgehend abgebaut ist.

### Offenbarung der Erfindung

Der Erfindung liegt die Aufgabe zugrunde, im Falle einer Störung in der Feststellbremse ein hohes Maß an Sicherheit gegen Gefahrsituationen zu gewährleisten.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf eine elektromechanische Feststellbremse in einem Fahrzeug mit einem elektrischen Bremsmotor, bei dessen Betätigung ein das Fahrzeug festsetzende Klemmkraft erzeugbar ist. Die Klemmkraft wird insbesondere in der Weise erzeugt, dass eine Rotationsbewegung des Bremsmotors in eine axiale Stellbewegung eines Bremskolbens mit einem Bremsbelag übertragen wird, welcher gegen eine Bremsscheibe gedrückt wird.

Zum Beenden des Parkvorganges muss die Feststellbremse wieder gelöst werden. Hierzu wird der elektrische Bremsmotor in Gegenrichtung betätigt, so dass der Bremskolben einschließlich Bremsbelag von der Bremsscheibe fortbewegt und die Klemmkraft abgebaut wird. Tritt während des Lösevorganges ein Fehler auf, der zu einer Störung des Klemmkraftabbaus führt, so besteht grundsätzlich die Gefahr, dass trotz noch nicht vollständig abgebauter Klemmkraft der Fahrer versucht, das Fahrzeug in Bewegung zu setzen. Ein weiteres Risiko ist darin zu sehen, dass nach der Störung die verbliebene Klemmkraft für ein sicheres Festsetzen des Fahrzeugs nicht mehr ausreicht, so dass insbesondere auf geneigter Fahrbahn die Gefahr besteht, dass das Fahrzeug sich versehentlich in Bewegung setzt.

Um bei derartigen Störungen das Gefährdungspotenzial herabzusetzen und die Feststellbremse wieder in einen normal funktionierenden Zustand zu versetzen, wird erfindungsgemäß im Falle einer Störung des Lösevorgangs die elektromechanische Bremsvorrichtung zum erneuten Erzeugen einer Klemmkraft wieder zugespannt. Damit ist sichergestellt, dass das Fahrzeug mit ausreichender Klemmkraft festgesetzt ist und nicht versehentlich wegrollen kann. Das Zuspannen mit erneutem Erzeugen einer Klemmkraft erfolgt selbsttätig, sobald eine Störung des vorangegangenen Lösevorgangs festgestellt wird.

Als Störung kommt beispielsweise eine Unterspannung bzw. ein Spannungsabfall im Bordnetz in Betracht, der groß genug ist, um den Lösevorgang der elektromechanischen Feststellbremse zu unterbrechen. Eine Störung kann aber auch vorliegen, wenn der Fahrer eine falsche Verhaltensweise zeigt, beispielsweise bei noch nicht abgeschlossenem Lösevorgang versucht, das Fahrzeug in Gang zu setzen und hierbei den Motor abwürgt.

Mittels des erfindungsgemäßen Verfahrens wird das Fahrzeug nach derartigen Störungen wieder in einen sicheren Haltezustand überführt. Es wird insbesondere bis zum Erreichen einer Nominalklemmkraft zugespannt, anschließend kann der elektrische Bremsmotor abgeschaltet werden, so dass die Feststellbremse wieder in ihrem festgespannten Ausgangszustand steht. Zum erneuten Lösen der Feststellbremse muss in diesem Fall vom Fahrer eine manuelle Betätigung durchgeführt werden.

Mit dem Überführen der Feststellbremse in den Parkzustand, in welchem die Feststellbremse eine Nominalklemmkraft ausübt, ist eine Rekalibrierung der Feststellbremse erreicht. Der elektrische Bremsmotor steht hierbei in einer definierten Position, aus der heraus erneut die Feststellbremse gelöst werden kann.

Es kann zweckmäßig sein, vor dem erneuten Erzeugen einer Klemmkraft, also dem Zuspannen der Feststellbremse nach Auftreten einer Störung, zunächst den elektrischen Bremsmotor bis zum Erreichen des Leerlaufbereiches weiter zu öffnen. Dies hat den Vorteil, dass bei dem sich anschließenden Zuspannen der elektrische Bremsmotor bei dem Start aus dem Leerlaufzustand heraus eine ausreichende Dynamik zum Erreichen der Nominalklemmkraft aufweist.

Soweit die Feststellbremse zwei elektromechanische Bremsvorrichtungen mit jeweils einem elektrischen Bremsmotor umfasst, beispielsweise an beiden Rädern an der Vorderachse oder der Hinterachse, kann es zweckmäßig sein, beide Bremsmotoren vor dem erneuten Zuspannen zunächst bis zum Erreichen des Leerlaufbereiches in Öffnungsrichtung zu verstellen und erst anschließend den Zuspannvorgang durchzuführen.

Des Weiteren kann es vorteilhaft sein, mit dem Auftreten einer Störung während des Lösevorgangs und dem einhergehenden Abschalten des elektrischen Bremsmotors über eine Zusatzbremsvorrichtung eine Klemmkraft zu erzeugen, um ein unbeabsichtigtes Losrollen des Fahrzeuges zu verhindern. Bei der Zusatzbremseinrichtung handelt es sich insbesondere um die hydraulische Fahrzeugbremse, deren hydraulischer Druck auf den Bremskolben wirkt und eine hydraulische Klemmkraft erzeugt. Auch während des regulären Zuspannvorganges kann es zweckmäßig sein, die Zusatzbremsvorrichtung zu betätigen, beispielsweise ergänzend zur elektromechanischen Bremsvorrichtung, um ein gewünschtes Klemmkraftniveau zu erreichen.

Alternativ oder zusätzlich zur Betätigung der Zusatzbremseinrichtung im Falle einer Störung ist es auch möglich, bei zwei separat vorhandenen elektromechanischen Bremsvorrichtungen mit jeweils einem elektrischen Bremsmotor zunächst einen der Bremsmotoren in seiner aktuellen Position zu belassen, den dieser Bremsmotor während des Auftretens der Störung eingenommen hat, so dass die über diesen Bremsmotor erzeugte Klemmkraft noch wirksam ist. Währenddessen kann im zweiten Bremsmotor der Rekalibrierungsvorgang durchgeführt werden, also zunächst bis zum Erreichen des Leerlaufzustandes geöffnet und anschließend bis zum Erreichen eines Nominalklemmkraftniveaus zugespannt werden. Danach kann der erste elektrische Bremsmotor, welcher zunächst in seiner aktuellen Position verharrt, rekalibriert werden, so dass auch dieser elektrische Bremsmotor zunächst bis zum Erreichen des Leerlaufzustandes geöffnet und anschließend bis zum Erreichen einer Nominalklemmkraft geschlossen wird. Nach Abschluss der Rekalibrierung werden zweckmäßigerweise beide elektrische Bremsmotoren abgeschaltet, um die erreichte Klemmkraft einzufrieren.

Gemäß einer weiteren zweckmäßigen Ausführung ist vorgesehen, nach dem Auftreten der Störung bei einer Feststellbremse mit zwei elektromechanischen Bremsvorrichtungen zunächst den elektrischen Bremsmotor einer Bremsvorrichtung bis zum Erreichen einer Mindestklemmkraft zuzuspannen und anschließend den zweiten elektrischen Bremsmotor in der vorbeschriebenen Weise zu rekalibrieren, woraufhin auch der erste elektrische Bremsmotor der Rekalibrierung unterzogen werden kann. Vorteilhaft bei dieser Vorgehensweise ist, dass über den vorgeschalteten Zuspannvorgang des ersten elektrischen Bremsmotors eine Mindestklemmkraft sichergestellt ist.

Das erfindungsgemäße Verfahren läuft in einem Regel- bzw. Steuergerät im Fahrzeug ab, das Bestandteil der Feststellbremse sein kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine elektromechanische Feststellbremse für ein Fahrzeug, bei der die Klemmkraft über einen elektrischen Bremsmotor erzeugt wird,
- Fig. 2: ein Ablaufdiagramm zum Rekalibrieren der Feststellbremse nach dem Auftreten einer Störung während des Lösevorgangs,
- Fig. 3: ein Ablaufdiagramm zum Rekalibrieren der Feststellbremse nach dem Auftreten einer Störung während des Lösevorgangs in einer weiteren Ausführung,
- Fig. 4: ein Ablaufdiagramm zum Rekalibrieren der Feststellbremse nach dem Auftreten einer Störung während des Lösevorgangs in einer weiteren Ausführung.

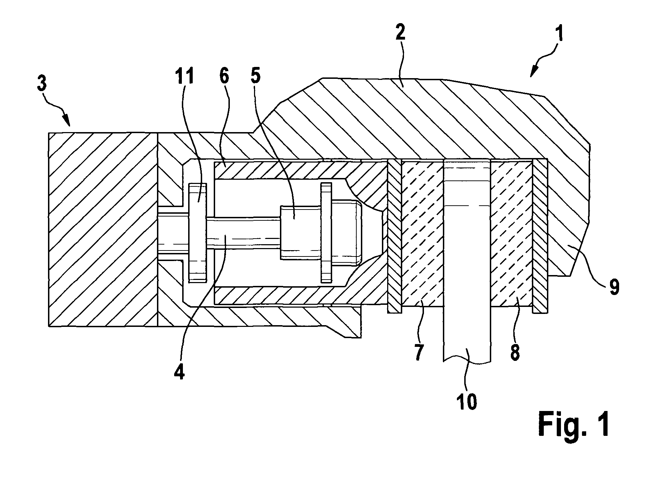

In Fig. 1 ist eine elektromechanische Feststellbremse 1 zum Festsetzen eines Fahrzeugs im Stillstand dargestellt. Die Feststellbremse 1 umfasst einen Bremssattel 2 mit einer Zange 9, welche eine Bremsscheibe 10 übergreift. Als Stellglied weist die Feststellbremse 1 einen Elektromotor als Bremsmotor 3 auf, der eine Spindel 4 rotierend antreibt, auf der ein Spindelbauteil 5 drehbar gelagert ist. Bei einer Rotation der Spindel 4 wird das Spindelbauteil 5 axial verstellt. Das Spindelbauteil 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich das Spindelbauteil 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt das Spindelbauteil 5 die innere Stirnseite des Bremskolbens 6, wodurch der axial verschieblich in der Feststellbremse 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

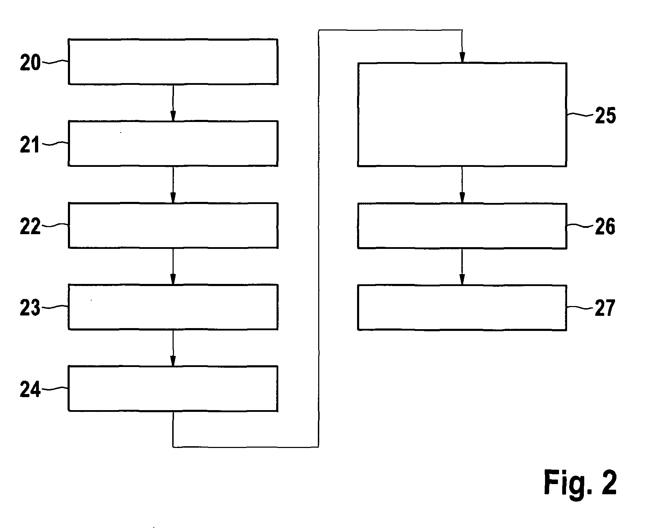

Fig. 2 zeigt ein Ablaufdiagramm mit Verfahrensschritten, welche durchgeführt werden, falls beim Lösevorgang der Feststellbremse eine Störung auftritt. Der Lösevorgang beginnt gemäß Verfahrensschritt 20 durch ein manuelles Auslösen durch den Fahrer. Daraufhin werden gemäß Schritt 21 die elektrischen Bremsmotoren der beiden elektromechanischen Bremsvorrichtungen, welche gemeinsam die Feststellbremse bilden und die jeweils an einem Rad einer gemeinsamen Achse verbaut sind, in die Löserichtung angesteuert, so dass der Druck der Bremskolben an die Bremsscheibe reduziert und die Klemmkraft abgebaut wird.

Im Verfahrensschritt 22 wird während des Lösevorganges ein Fehler erkannt, der beispielsweise in Form eines Spannungsabfalls im elektrischen Bordnetz vorliegt. Ein Fehler liegt auch vor, wenn versucht wird, das Fahrzeug zu bewegen, bevor der Lösevorgang abgeschlossen ist.

Gemäß Schritt 23 werden beide elektrische Bremsmotoren der Feststellbremse abgeschaltet, auch wenn der zuvor erkannte Fehler nur einen Bremsmotor bzw. eine der beiden elektromechanischen Bremsvorrichtungen betrifft.

Im Verfahrensschritt 24 wird nach dem Abschalten der elektrischen Bremsmotoren über die hydraulische Fahrzeugbremse selbsttätig ein maximaler Bremsdruck aufgebaut, der über die gleichen Bremskolben, die auch von den elektrischen Bremsmotoren beaufschlagt werden, auf die Bremsscheiben wirkt. Damit soll eine ausreichende Klemmkraft zum sicheren Festsetzen des Fahrzeuges sichergestellt werden.

Der Verfahrensschritt 25 stellt die Rekalibrierung der elektromechanischen Bremsvorrichtung dar. In diesem Schritt werden die elektrischen Bremsmotoren beider Bremsvorrichtungen zunächst weiter in Richtung Lösestellung angesteuert, bis der Leerlaufzustand erreicht ist, in welchem keine elektromechanische Klemmkraft mehr erzeugt wird. Anschließend werden beide elektrischen Bremsmotoren wieder bis zum Erreichen einer Nominalklemmkraft geschlossen. Damit ist die Rekalibrierung für beide elektromechanische Bremsvorrichtungen abgeschlossen. Dieser Zustand wird im Verfahrensschritt 26 überprüft, wobei gemäß Verfahrensschritt 27 nach erfolgreichem Abschluss der Rekalibrierung der hydraulische Bremsdruck, der zuvor an allen vier Rädern aufgebaut wurde, wieder abgebaut wird. Das Festsetzen wird nunmehr allein über die elektromechanische Bremsvorrichtung der Feststellbremse bewirkt. Der gesamte Vorgang ist damit abgeschlossen, die Feststellbremse befindet sich wieder im geschlossenen Zustand, in welchem eine Nominalklemmkraft aufgebracht wird. Zum erneuten Lösen der Feststellbremse muss vom Fahrer eine manuelle Betätigung erzeugt werden.

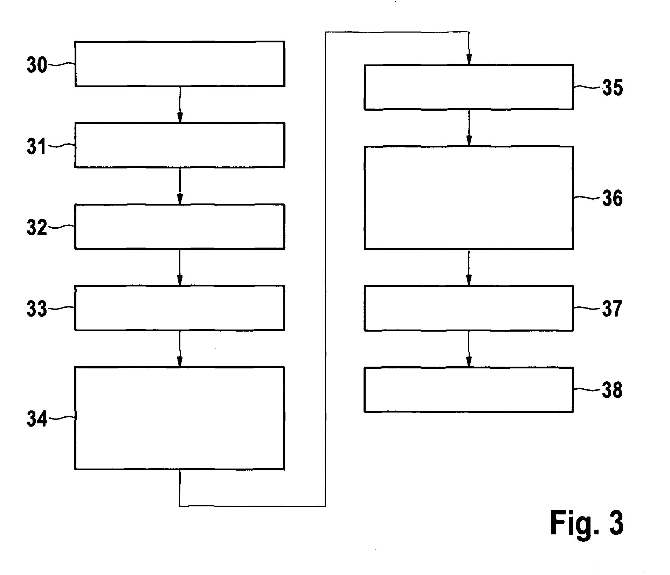

In Fig. 3 ist ein Ablaufdiagramm zum Rekalibrieren der Feststellbremse nach dem Auftreten einer Störung während des Lösevorgangs in einer alternativen Ausführung gezeigt. Wie beim vorhergehenden Ausführungsbeispiel wird in einem ersten Verfahrensschritt 30 durch den Fahrer die Feststellbremse manuell gelöst, woraufhin im nächsten Verfahrensschritt 31 die beiden elektrischen Bremsmotoren der Feststellbremse in Richtung ihrer Lösestellung angesteuert werden und die Klemmkraft abgebaut wird. Im nächsten Verfahrensschritt 32 wird eine Störung während des Lösevorganges erkannt, woraufhin im Verfahrensschritt 33 beide elektrischen Bremsmotoren abgeschaltet werden.

Die Verfahrensschritte 30 bis 33 stimmen mit den Verfahrensschritten 20 bis 23 des Ausführungsbeispiels nach Fig. 2 überein. Im Unterschied zum vorhergehenden Ausführungsbeispiel wird aber gemäß Fig. 3 nach dem Abschalten der elektrischen Bremsmotoren kein hydraulischer Bremsdruck aufgebracht. Vielmehr wird gemäß Verfahrensschritt 34 zunächst der erste elektrische Bremsmotor rekalibriert, wohingegen der zweite elektrische Bremsmotor in der aktuellen Position verharrt, in welcher noch eine Klemmkraft wirksam ist. Dadurch ist sichergestellt, dass das Fahrzeug nicht versehentlich sich in Bewegung setzt. Zur Rekalibrierung des ersten elektrischen Bremsmotors wird dieser zunächst weiter in Richtung Lösestellung angesteuert, bis der Leerlaufzustand in diesem Bremsmotor erreicht ist. Anschließend wird der erste elektrische Bremsmotor bis zum Erreichen einer Nominalklemmkraft wieder geschlossen und danach abgeschaltet; damit ist der Rekalibrierungsvorgang des ersten elektrischen Bremsmotors abgeschlossen (Schritt 35).

Im weiteren Verlauf wird gemäß Verfahrensschritt 36 die Rekalibrierung des zweiten elektrischen Bremsmotors durchgeführt, indem dieser zunächst in Richtung Lösestellung angesteuert wird bis zum Erreichen des Leerlaufs und anschließend in Richtung Schließposition bis zum Erreichen einer Nominalklemmkraft verstellt wird, woraufhin auch dieser zweite elektrische Bremsmotor abgeschaltet wird (Schritt 37).

Damit ist die Rekalibrierung beider elektrischer Bremsmotoren beendet, die Feststellbremse befindet sich in ihrem geschlossenen Zustand, in welchem eine Nominalklemmkraft aufgebracht wird. Das Verfahren ist damit beendet (Schritt 38).

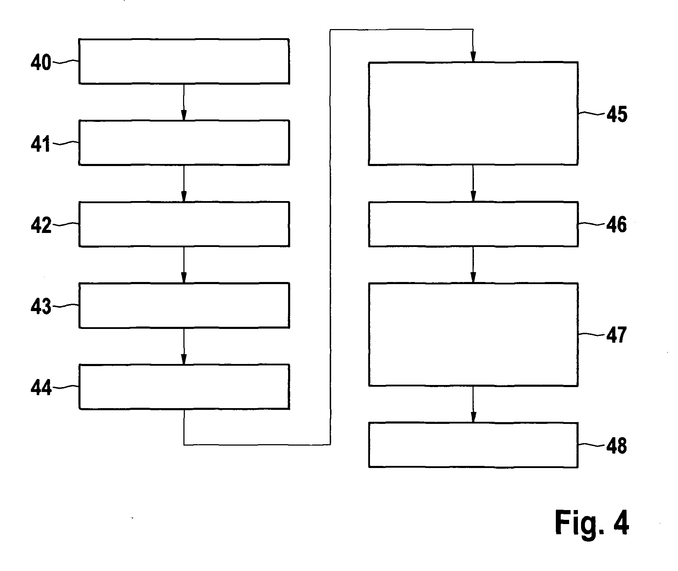

Das Ablaufdiagramm gemäß Fig. 4 stimmt im Wesentlichen mit demjenigen nach Fig. 3 überein, es sind insbesondere die ersten Verfahrensschritte 40 bis 43 mit den Verfahrensschritten 30 bis 33 des Verfahrens gemäß Fig. 3 identisch, so dass auf die dortige Beschreibung verwiesen wird.

Im Verfahrensschritt 44 wird im Unterschied zum vorhergehenden Ausführungsbeispiel zunächst ein erster elektrischer Bremsmotor so weit in Richtung Schließposition der Bremse angesteuert, bis eine Abschaltbedingung erfüllt ist, insbesondere eine definierte Klemmkraft über diesen elektrischen Bremsmotor eingestellt ist. Hierdurch soll sichergestellt werden, dass während des Rekalibrierungsvorganges eine ausreichend hohe Klemmkraft zum sicheren Festsetzen des Fahrzeuges herrscht.

Im nächsten Verfahrensschritt 45 erfolgt die Rekalibrierung des zweiten elektrischen Bremsmotors, indem dieser zunächst in Richtung Lösestellung bis zum Erreichen der Leerlaufposition angesteuert und anschließend in Schließposition bis zum Erreichen eines Nominalklemmkraftniveaus verstellt wird. Daraufhin wird gemäß Verfahrensschritt 46 der zweite elektrische Bremsmotor abgeschaltet.

Im Anschluss hieran erfolgt die Rekalibrierung des ersten elektrischen Bremsmotors, indem dieser zunächst in Richtung Löseposition bis zum Erreichen der Leerlaufstellung angesteuert und anschließend in Richtung Schließposition bis zum Erreichen einer Nominalklemmkraft verstellt wird. Danach wird gemäß Verfahrensschritt 48 auch dieser elektrische Bremsmotor abgeschaltet, das Verfahren ist beendet.

## Patentansprüche

1. Verfahren zum Betätigen einer Feststellbremse (1), die eine elektromechanische Bremsvorrichtung mit einem elektrischen Bremsmotor (3) umfasst, **dadurch gekennzeichnet, dass** im Falle einer Störung des Lösevorgangs, bei dem die von der elektromechanischen Bremsvorrichtung erzeugte Klemmkraft abgebaut wird, die elektromechanische Bremsvorrichtung zum erneuten Erzeugen einer Klemmkraft wieder zugespannt wird.

2. Verfahren nach Anspruch 1, **dadurch gekennzeichnet, dass** der Bremsmotor (3) der elektromechanischen Bremsvorrichtung nach dem Erreichen einer Nominalklemmkraft abgeschaltet wird.

3. Verfahren nach Anspruch 1 oder 2, **dadurch gekennzeichnet, dass** vor dem erneuten Erzeugen einer Klemmkraft der elektrische Bremsmotor (3) bis zum Erreichen des Leerlaufbereichs des Bremsmotors (3) geöffnet wird.

4. Verfahren nach einem der Ansprüche 1 bis 3, **dadurch gekennzeichnet, dass** bei einer Unterbrechung des Lösevorgangs die hydraulische Fahrzeugbremse betätigt wird.

5. Verfahren nach einem der Ansprüche 1 bis 4, **dadurch gekennzeichnet, dass** die Feststellbremse (1) zwei elektromechanische Bremsvorrichtungen mit jeweils einem elektrischen Bremsmotor (3) umfasst.

6. Verfahren nach Anspruch 5, **dadurch gekennzeichnet, dass** die beiden elektromechanischen Bremsvorrichtungen nach dem Auftreten einer Störung simultan in Richtung Löseposition bzw. Klemmposition verstellt werden.

7. Verfahren nach Anspruch 5, **dadurch gekennzeichnet, dass** nach dem Auftreten einer Störung die beiden elektromechanischen Bremsvorrichtungen zeitlich versetzt in Richtung Löseposition bzw. Klemmposition verstellt werden.

8. Verfahren nach Anspruch 7, **dadurch gekennzeichnet, dass** nach dem Auftreten einer Störung ein elektrischer Bremsmotor (3) in seiner aktuellen Position verharrt und der zweite elektrische Bremsmotor (3) zum Rekalibrieren zugespannt wird.

9. Verfahren nach Anspruch 7, **dadurch gekennzeichnet, dass** nach dem Auftreten einer Störung ein elektrischer Bremsmotor (3) zugespannt und der zweite elektrische Bremsmotor (3) rekalibriert wird.

10. Verfahren nach einem der Ansprüche 1 bis 9, **dadurch gekennzeichnet, dass** die Klemmkraft ergänzend von einer Zusatzbremsvorrichtung erzeugt wird.

11. Verfahren nach Anspruch 10, **dadurch gekennzeichnet, dass** als Zusatzbremsvorrichtung eine hydraulische Fahrzeugbremse eingesetzt wird.

12. Regel- bzw. Steuergerät zur Durchführung des Verfahrens nach einem der Ansprüche 1 bis 11.

13. Feststellbremse in einem Fahrzeug mit einem Regel- bzw. Steuergerät nach Anspruch 12.

## Claims

1. Method for actuating a parking brake (1) which comprises an electromechanical braking device having an electric brake motor (3), **characterized in that**, in the case of a fault in the release process in which the clamping force generated by the electromechanical braking device is reduced, the electromechanical braking device is re-applied to generate a clamping force again.

2. Method according to Claim 1, **characterized in that** the brake motor (3) of the electromechanical braking device is switched off after a nominal clamping force is achieved.

3. Method according to Claim 1 or 2, **characterized in that**, before a clamping force is generated again, the electric brake motor (3) is opened until the idling range of the brake motor (3) is achieved.

4. Method according to one of Claims 1 to 3, **characterized in that** the hydraulic vehicle brake is actuated in the case of an interruption of the release process.

5. Method according to one of Claims 1 to 4, **characterized in that** the parking brake (1) comprises two electromechanical braking devices each having an electric brake motor (3).

6. Method according to Claim 5, **characterized in that**, after the occurrence of a fault, the two electromechanical braking devices are displaced simultaneously in the release position direction or clamping position direction.

7. Method according to Claim 5, **characterized in that**, after the occurrence of a fault, the two electromechanical braking devices are displaced at staggered intervals in the release position direction or clamping position direction.

8. Method according to Claim 7, **characterized in that**, after the occurrence of a fault, one electric brake motor (3) remains in its current position and the second electric brake motor (3) is applied for recalibration.

9. Method according to Claim 7, **characterized in that**, after the occurrence of a fault, one electric brake motor (3) is applied and the second electric brake motor (3) is recalibrated.

10. Method according to one of Claims 1 to 9, **characterized in that** the clamping force is additionally generated by an auxiliary braking device.

11. Method according to Claim 10, **characterized in that** a hydraulic vehicle brake is used as the auxiliary braking device.

12. Closed-loop or open-loop control device for carrying out the method according to one of Claims 1 to 11.

13. Parking brake in a vehicle having a closed-loop or open-loop control device according to Claim 12.

## Revendications

1. Procédé d'actionnement d'un frein de stationnement (1), lequel comprend un dispositif de freinage électromécanique muni d'un motofrein électrique (3), **caractérisé en ce que** dans le cas d'un défaut dans l'opération de desserrage lors de laquelle la force de serrage générée par le dispositif de freinage électromécanique est relâchée, le dispositif de freinage électromécanique est de nouveau serré en vue de générer de nouveau une force de serrage.

2. Procédé selon la revendication 1, **caractérisé en ce que** le motofrein (3) du dispositif de freinage électromécanique est mis hors tension après avoir atteint une force de serrage nominale.

3. Procédé selon la revendication 1 ou 2, **caractérisé en ce qu'**avant de générer de nouveau une force de serrage, le motofrein électrique (3) est ouvert jusqu'à ce que la plage de fonctionnement à vide du motofrein (3) soit atteinte.

4. Procédé selon l'une des revendications 1 à 3, **caractérisé en ce qu'**en cas d'interruption de l'opération de desserrage, le frein hydraulique du véhicule est actionné.

5. Procédé selon l'une des revendications 1 à 4, **caractérisé en ce que** le frein de stationnement (1) comprend deux dispositifs de freinage électromécaniques pourvus chacun d'un motofrein électrique (3).

6. Procédé selon la revendication 5, **caractérisé en ce qu'**après qu'un défaut soit survenu, les deux dispositifs de freinage électromécaniques sont déplacés simultanément en direction de la position de desserrage ou de la position de serrage.

7. Procédé selon la revendication 5, **caractérisé en ce qu'**après qu'un défaut soit survenu, les deux dispositifs de freinage électromécaniques sont déplacés en direction de la position de desserrage ou de la position de serrage avec un décalage dans le temps.

8. Procédé selon la revendication 7, **caractérisé en ce qu'**après qu'un défaut soit survenu, un motofrein électrique (3) reste dans sa position actuelle et le deuxième motofrein électrique (3) applique le frein en vue d'un recalibrage.

9. Procédé selon la revendication 7, **caractérisé en ce qu'**après qu'un défaut soit survenu, un motofrein électrique (3) applique le frein et le deuxième motofrein électrique (3) est recalibré.

10. Procédé selon l'une des revendications 1 à 9, **caractérisé en ce que** la force de serrage est générée en complément par un dispositif de freinage supplémentaire.

11. Procédé selon la revendication 10, **caractérisé en ce que** le dispositif de freinage supplémentaire utilisé est un frein hydraulique de véhicule.

12. Régulateur ou contrôleur destiné à mettre en ouvre le procédé selon l'une des revendications 1 à 11.

13. Frein de stationnement dans un véhicule équipé d'un régulateur ou d'un contrôleur selon la revendication 12.
